# EUROPEAN PATENT APPLICATION

(11) **EP 4 332 896 A1**
(43) Date of publication of application: **06.03.2024**
(21) Application number: 22795652.1
(22) Date of filing: 20.04.2022
(51) Int. Cl.: G06T 7/277

(54) **OBJECT TRACKING DEVICE**

(30) Priority: 27.04.2021 JP 2021075295
(71) Applicant: Kyocera Corporation, Kyoto-shi Kyoto 612-8501 (JP)
(72) Inventor: YAMAMOTO, Kenji, Kyoto-shi, Kyoto 612-8501 (JP); KURODA, Jun, Kyoto-shi, Kyoto 612-8501 (JP); SAHARA, Tooru, Kyoto-shi, Kyoto 612-8501 (JP); TONG, Fangwei, Kyoto-shi, Kyoto 612-8501 (JP); HOMMA, Takuya, Kyoto-shi, Kyoto 612-8501 (JP)
(74) Representative: Viering, Jentschura & Partner mbB Patent- und Rechtsanwälte
(86) International application number: PCT/JP2022/018331
(87) International publication number: WO 2022/230739

(57) **Abstract**

An object tracking device that can track an object accurately and consistently is provided. An object tracking device (20) includes an input interface (21), a processor (23), and an output interface (24). The input interface (21) is configured to acquire sensor data. The processor (23) is configured to detect a detection target from the sensor data and track the detection target using Kalman filters associated with each of the detection target and an observed value. The output interface (24) is configured to output a detection result regarding the detection target. The processor (23) is configured to impose a limit on a range of variation in an index of the Kalman filters that influences tracking of the detection target.

## Description

### CROSS-REFERENCE TO RELATED APPLICATIONS

This application claims priority based on Japanese Patent Application No. 2021-075295 (filed April 27, 2021), the entire disclosure of which is hereby incorporated by reference.

### TECHNICAL FIELD

The present disclosure relates to an object tracking device.

### BACKGROUND OF INVENTION

A known technology detects a nearby object and performs tracking to predict the motion of the detected object. For example, Patent Literature 1 discloses a device that detects the presence or absence of approaching vehicles and pedestrians by processing an image signal. The image signal is outputted from a vehicle-mounted camera that captures images around the vehicle. The device displays approaching vehicles and pedestrians, each being marked with a rectangular frame.

### CITATION LIST

### PATENT LITERATURE

Patent Literature 1: Japanese Patent Laid-Open No. 11-321494

### SUMMARY

In one embodiment, an object tracking device includes an input interface, a processor, and an output interface. The input interface is configured to acquire sensor data. The processor is configured to detect a detection target from the sensor data and track the detection target using Kalman filters associated with each of the detection target and an observed value. The output interface is configured to output a detection result regarding the detection target. The processor is configured to impose a limit on a range of variation in an index of the Kalman filters that influences tracking of the detection target.

### BRIEF DESCRIPTION OF THE DRAWINGS

FIG. 1 is a block diagram illustrating a schematic configuration of an object tracking system including an object tracking device according to an embodiment.
FIG. 2 is a diagram illustrating a vehicle equipped with the object tracking system in FIG. 1, and detection targets.
FIG. 3 is a flowchart illustrating an example of a process to track an image of an object in a moving image.
FIG. 4 is a diagram illustrating an example of an image of an object in a moving image.
FIG. 5 is a diagram for explaining the relationship between an object in a real space, an image of the object in a moving image, and a point mass in a virtual space.
FIG. 6 is a diagram illustrating an example of the movement of a point mass in a virtual space.
FIG. 7 is a diagram for explaining data association.
FIG. 8 is a diagram illustrating an example of a hierarchical structure for tracked object ID management.
FIG. 9 is a diagram for explaining a limit on the Mahalanobis distance.
FIG. 10 is a diagram for explaining a limit on a grouping area.
FIG. 11 is a diagram for explaining a limit on a grouping area.
FIG. 12 is a diagram for explaining a limit on the size of an error ellipse according to output accuracy.
FIG. 13 is a diagram for explaining a limit on the size of an error ellipse according to the saturability of a detection result.

### DESCRIPTION OF EMBODIMENTS

Hereinafter, an embodiment of the present disclosure will be described with reference to the drawings. The drawings used in the following description are schematic. The dimensional proportions and the like in the drawings do not necessarily match the real proportions.

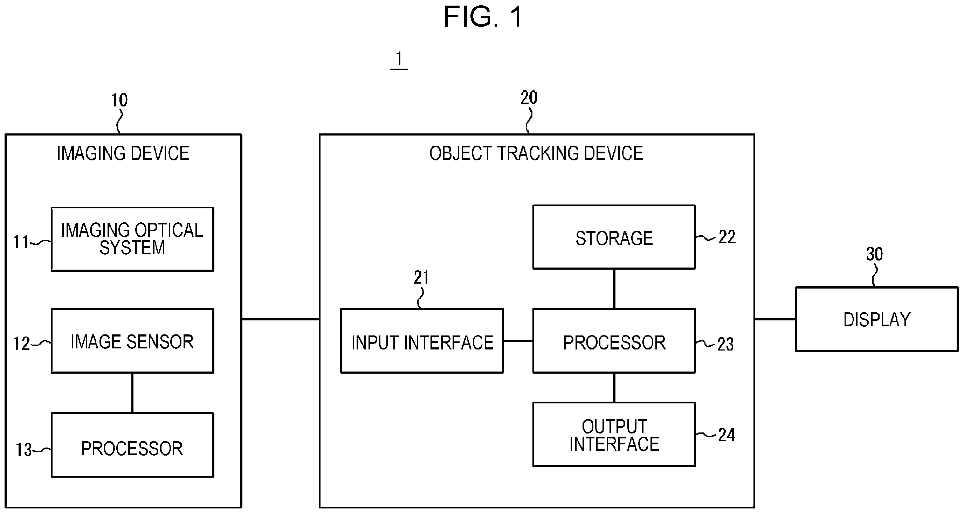

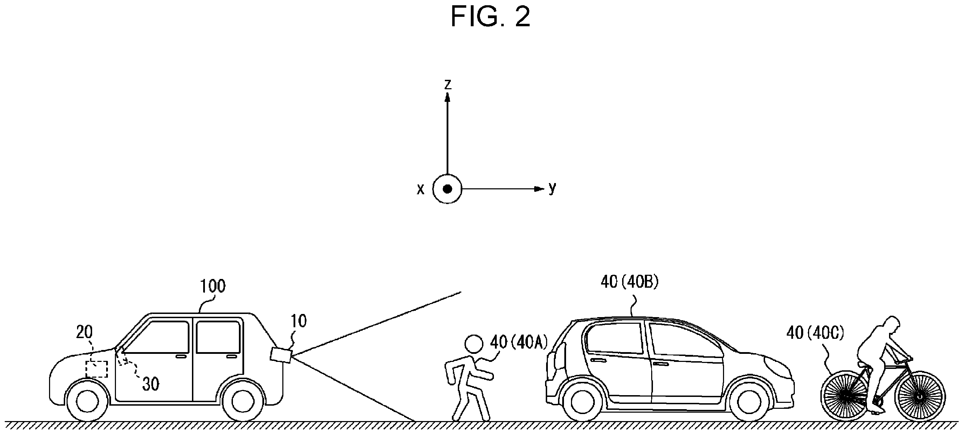

FIG. 1 is a block diagram illustrating a schematic configuration of an object tracking system 1. In an embodiment of the present disclosure, an object tracking device 20 is included in the object tracking system 1. In the present embodiment, the object tracking system 1 includes an imaging device 10, the object tracking device 20, and a display 30. In the present embodiment, the object tracking system 1 is mounted to a vehicle 100. The vehicle 100 is one example of a moving body, as exemplified in FIG. 2.

In the present embodiment, the object tracking device 20 acquires a moving image from the imaging device 10 as sensor data. That is, in the present embodiment, the sensor used to detect a detection target is an image sensor 12. The image sensor 12 is provided in the imaging device 10 and captures an image of visible light. However, the object tracking system 1 is not limited to the configuration illustrated in FIG. 1. The object tracking system 1 can be provided with a different device from the imaging device 10, insofar as the different device can detect a detection target. In a different example, the object tracking system 1 may be provided with a measurement device instead of the imaging device 10. The measurement device measures the distance to a detection target from a reflected wave of radiated laser light. In a different example, the object tracking system 1 may be provided with a detection device instead of the imaging device 10. The detection device includes a millimeter-wave sensor. In a different example, the object tracking system 1 may be provided with an imaging device 10 including an image sensor 12 that captures an image of light outside the visible light range.

In the present embodiment, the object tracking system 1 is mounted to a moving body that moves. The detection target is an object 40 (see FIG. 2) in the surroundings of the moving body. However, the object tracking system 1 is not limited to being mounted to a moving body. In a different example, the object tracking system 1 may be used in a factory or other facility. In this case, the detection target may be an employee, a transport robot, a product, or the like. In a different example, the object tracking system 1 may be used in a nursing home or the like. In this case, the detection target may be an elderly person, a staff member, or the like in a room. The object tracking system 1 is not limited to performing object tracking for safe driving or safe behavior. For example, the object tracking system 1 may perform object tracking to increase work efficiency, improve quality control, or raise productivity at agricultural and industrial sites, for example. In the present disclosure, the object to be detected by the object tracking device 20 includes not only things such as moving bodies, but also people.

As illustrated in FIG. 2, in the present embodiment, a coordinate system in a real space is defined. In this coordinate system, the x-axis direction is defined as the lateral direction of the vehicle 100 equipped with the imaging device 10. The positive y-axis direction is defined as the backward direction of the vehicle 100. The x-axis and y-axis directions are parallel to the road surface on which the vehicle 100 is located. The z-axis direction is perpendicular to the road surface. The z-axis direction may be referred to as the vertical direction. The x-axis, y-axis, and z-axis directions are mutually orthogonal. The x-axis, y-axis, and z-axis directions are not limited to the definitions above. The x-axis, y-axis, and z-axis directions may be interchanged.

The imaging device 10 includes an imaging optical system 11, an image sensor 12, and a processor 13.

The imaging device 10 may be installed at any of various positions in or on the vehicle 100. The imaging device 10 includes, but is not limited to, a front camera, a left side camera, a right side camera, a rear camera, and the like. The front camera, left side camera, right side camera, and rear camera are installed in or on the vehicle 100 to enable image capture of the area surrounding the vehicle 100 in front, on the left side, on the right side, and behind, respectively. In the embodiment described as one example hereinafter, as illustrated in FIG. 2, the imaging device 10 is attached to the vehicle 100 to enable image capture behind the vehicle 100. The optical axis direction of the imaging device 10 points downward from the horizontal direction.

The imaging optical system 11 may include one or more lenses. The image sensor 12 may include a charge-coupled device (CCD) image sensor or a complementary MOS (CMOS) image sensor.

The imaging optical system 11 is configured to form an image of an object (subject image) on an imaging surface of the image sensor 12. The image sensor 12 is configured to convert the image of the object into an electrical signal. The image sensor 12 can capture a moving image at a predetermined frame rate. A frame is each still image included in a moving image. The frame rate refers to the number of images that can be captured every second. The frame rate may be 60 frames per second (fps) or 30 fps, for example.

The processor 13 is configured to control the imaging device 10 as a whole and execute various types of image processing on a moving image outputted from the image sensor 12. The image processing to be performed by the processor 13 may include any processing, such as distortion correction, brightness adjustment, contrast adjustment, and gamma correction.

The processor 13 may include one or more processors. For example, the processor 13 includes one or more circuits or units configured to perform one or more data computation procedures or processes by executing instructions stored in an associated memory. The processor 13 includes at least one processor, microprocessor, microcontroller, application-specific integrated circuit (ASIC), digital signal processor (DSP), programmable logic device (PLD), or field-programmable gate array (FPGA), any combination of these devices or configurations, or any combination of other known devices or configurations.

The object tracking device 20 includes an input interface 21, storage 22, a processor 23, and an output interface 24.

The input interface 21 is configured to communicate with the imaging device 10 through a wired or wireless means of communication. The input interface 21 acquires a moving image from the imaging device 10 as sensor data. The input interface 21 may correspond to the transmission scheme of an image signal that the imaging device 10 transmits. The input interface 21 may also be referred to as an inputter or acquirer. The imaging device 10 and the input interface 21 may be connected by an in-vehicle communication network, such as a control area network (CAN).

The storage 22 is a storage device storing data and a program required for processing to be performed by the processor 23. For example, the storage 22 temporarily stores a moving image acquired from the imaging device 10. For example, the storage 22 stores data generated by processing performed by the processor 23. One or more from among semiconductor memory, magnetic memory, and optical memory, for example, may be used to form the storage 22. The semiconductor memory may include volatile memory and non-volatile memory. The magnetic memory may include a hard disk and magnetic tape, for example. The optical memory may include a Compact Disc (CD), a Digital Versatile Disc (DVD), and a Blu-ray^{®} Disc (BD), for example.

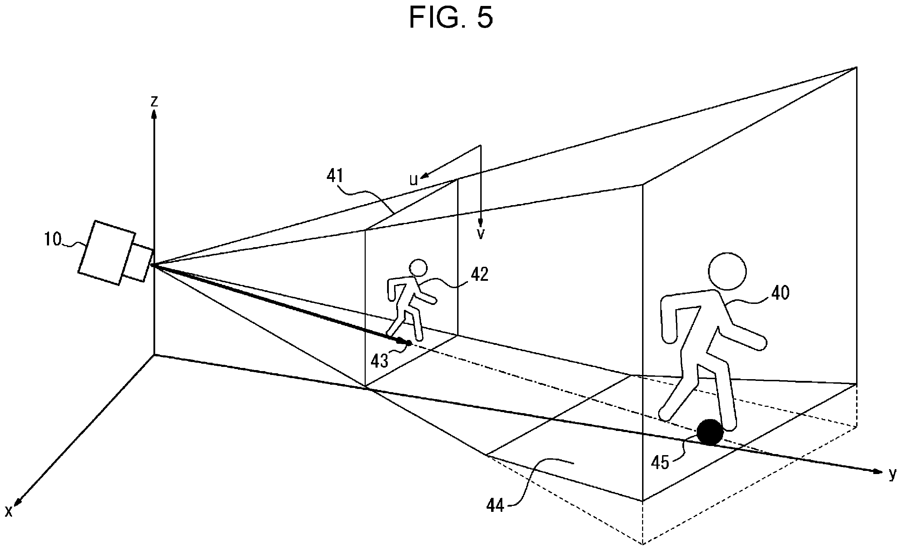

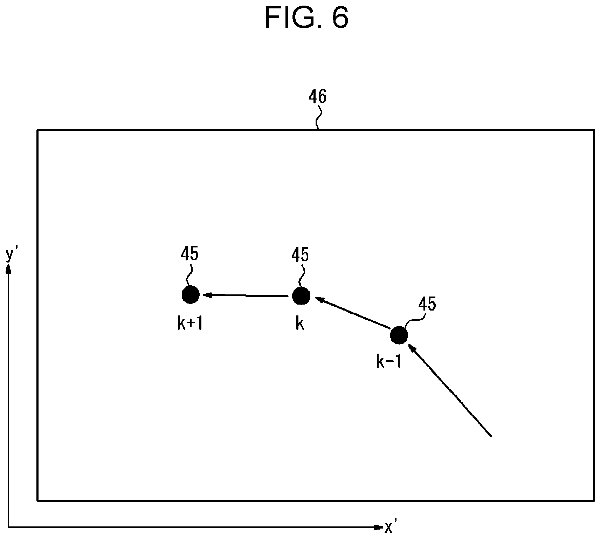

The processor 23 controls the object tracking device 20 as a whole. The processor 23 recognizes an image of an object included in a moving image acquired through the input interface 21. The processor 23 maps the coordinates of the recognized image of the object to the coordinates of the object 40 in a virtual space 46 (see FIG. 6) and tracks the position and speed of a point mass 45 (see FIG. 5) representing the object 40 in the virtual space 46. The point mass 45 is a point that has mass and is of negligible size. The virtual space 46 is a two-dimensional space in the coordinate system defined by the three axes of the x-axis, y-axis, and z-axis of the real space, with the value in the z-axis direction being set to a predetermined, fixed value. The processor 23 may map the coordinates of the tracked point mass 45 in the virtual space 46 to coordinates in a moving image.

The processor 23 detects a detection target from a moving image, and tracks the detection target using Kalman filters. The processor 23 is capable of detecting a plurality of detection targets from a moving image and tracking each of the plurality of detection targets using Kalman filters. In the technology of the related art, if a plurality of detection targets with overlapping images are detected in a moving image, tracking error occurs or the tracking accuracy is lowered. In the present embodiment, the processor 23 can avoid such problems by associating one or more Kalman filters to each of a plurality of detection targets. The processor 23 manages observed values, Kalman filters, and identification information (hereinafter "tracked object ID") unique to each tracked object in layers (tiers). The processor 23 determines whether tracked objects are the same object (same detection target) and executes a process of associating the observed values, Kalman filters, and tracked object IDs. Thus, the accuracy of tracking a plurality of detection targets can be improved further.

The processor 23 is configured to impose a limit on a range of variation in an index of the Kalman filters that influences tracking of the detection target. In the present embodiment, the processor 23 imposes an upper limit and/or a lower limit on an index including at least one selected from the group consisting of the Mahalanobis distance used to associate Kalman filters with an observed value, the radius of a grouping area used to associate Kalman filters with a detection target, and the size of the error ellipse of a Kalman filter. Appropriately limiting the range of variation in an index of the Kalman filters enables consistent tracking that is resistant to intermittent loss of association with a detection target and observed value. Details of the processing to be performed by the processor 23 will be described later. Like the processor 13 of the imaging device 10, the processor 23 may include a plurality of processors. Like the processor 13, the processor 23 may be a combination of multiple types of devices.

The output interface 24 is configured to output an output signal from the object tracking device 20. The output interface 24 may also be referred to as an outputter. The output interface 24 may output a detection result regarding a detection target. The detection result may be the coordinates of the point mass 45, for example.

The output interface 24 may include a physical connector and a wireless communicator. The output interface 24 may be connected to a CAN or other network of the vehicle 100, for example. The output interface 24 may be connected to the display 30, a control device and alarm device of the vehicle 100, and the like through a CAN or other communication network. Information outputted from the output interface 24 may be used, as appropriate, by each of the display 30, the control device, and the alarm device.

The display 30 may display a moving image outputted from the object tracking device 20. The display 30 may receive, from the object tracking device 20, the coordinates of the point mass 45 representing the position of the image of an object. In this case, the display 30 may have a function for generating an image element (for example, a warning to be displayed together with an approaching object) in accordance with the received coordinates, and overlaying the generated image element onto the moving image. Any of various types of devices may be adopted as the display 30. For example, a liquid crystal display (LCD), an organic electro-luminescence (EL) display, an inorganic EL display, a plasma display panel (PDP), a field emission display (FED), an electrophoretic display, or a twisting ball display may be adopted as the display 30.

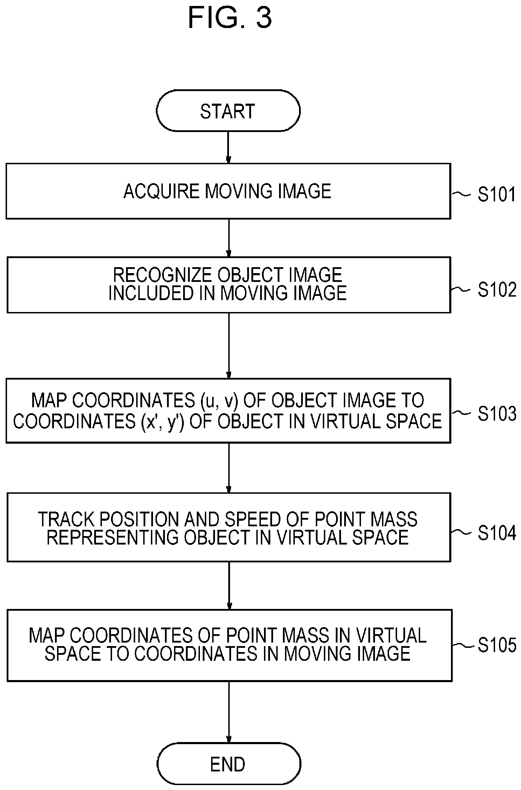

The flowchart in FIG. 3 will be referenced to describe an object tracking method executed by the object tracking device 20. The object tracking device 20 may be configured to implement the processing performed by the processor 23 described below by loading a program recorded on a non-transitory computer-readable medium. The non-transitory computer-readable medium includes, but is not limited to, a magnetic storage medium, an optical storage medium, a magneto-optical storage medium, and a semiconductor storage medium. The magnetic storage medium includes a magnetic disk, a hard disk, and magnetic tape. The optical storage medium includes a CD, DVD, BD, and other optical discs. The semiconductor storage medium includes read-only memory (ROM), electrically erasable programmable read-only memory (EEPROM), and flash memory.

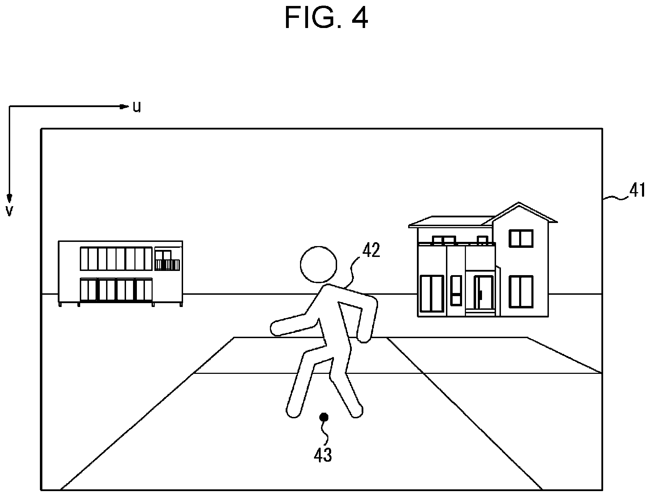

The flowchart in FIG. 3 illustrates a process executed by the processor 23 to acquire sequential frames of a moving image. The processor 23 of the object tracking device 20 follows the flowchart in FIG. 3 to track (perform tracking of) the position of an object image 42 (see FIG. 4) every time a frame of a moving image is acquired. As illustrated in FIG. 2, a plurality of objects 40 may exist as detection targets. The plurality of objects 40 may include a pedestrian 40A, an automobile 40B, and a bicycle 40C. The object 40 is not limited to moving objects and people. The object 40 may include any of various target objects, such as an obstruction on a road. The following object tracking method is described using one of the plurality of objects 40 (specifically, the pedestrian 40A) included in a moving image captured by the imaging device 10 installed at the rear of the vehicle 100. Each of the other objects 40 (for example, the automobile 40B and the bicycle 40C) is tracked by a same and/or similar process.

The processor 23 acquires each frame of a moving image from the imaging device 10 through the input interface 21 (step S101). FIG. 4 illustrates an example of a single frame of a moving image. In the example in FIG. 4, an image (object image 42) of the object 40 behind the vehicle 100 is displayed in a two-dimensional image space 41 defined by a uv coordinate system. The u coordinate represents the horizontal direction of the image. The v coordinate represents the vertical direction of the image. In FIG. 4, the origin of the uv coordinate system is the point at the upper-left corner of the image space 41. The direction going from left to right is defined to be the positive direction of the u coordinate. The direction going from top to bottom is defined to be the positive direction of the v coordinate.

The processor 23 uses image recognize to recognize the object image 42 from each frame of the moving image (step S 102). The method of recognizing the object image 42 includes any of various known methods. For example, the method of recognizing the object image 42 includes a method based on recognizing the shapes of objects such as cars and people, a method based on template matching, a method of calculating features from an image and using the features for matching, or the like. Features can be calculated by using a function approximator that can be trained to learn input-output relationships. As an example, a neural network can be used as the function approximator that can be trained to learn input-output relationships.

The processor 23 maps the coordinates (u, v) of the object image 42 in the image space 41 to coordinates (x', y') of the object in the virtual space 46 (see FIG. 6) (step S103). Generally, two-dimensional coordinates (u, v) in the image space 41 cannot be converted to coordinates (x, y, z) in the real space. However, by specifying the height of the real space and fixing the z coordinate to a predetermined value, the coordinates (u, v) in the image space 41 can be mapped to the coordinates (x', y') in the two-dimensional virtual space 46. The virtual space 46 corresponds to the coordinates (x, y, z0) in the real space (z0 being the fixed value). In the present embodiment, a two-dimensional virtual space 46 is defined, but depending on the input information (type of sensor), a three-dimensional virtual space 46 may also be defined.

As illustrated in FIG. 4, a representative point 43 is specified. The representative point 43 is located in the center of the lowest part of the object image 42. For example, the representative point 43 can be set to the position in the image space 41 which is located at the lowest v coordinate and at the center of the range of u coordinates of the area occupied by the object image 42. The representative point 43 is assumed to be the position where the object 40 corresponding to the object image 42 contacts the road surface or ground surface.

FIG. 5 illustrates the relationship between the object 40 located in the three-dimensional real space and the object image 42 in the two-dimensional image space 41. If the internal parameters of the imaging device 10 are known, the coordinates (u, v) of the image space 41 can be used as a basis for calculating the direction from the center of the imaging optical system 11 of the imaging device 10 to the corresponding coordinates (x, y, z) in the real space. The internal parameters of the imaging device 10 include information on the focal length and distortion of the imaging optical system 11, the pixel size of the image sensor 12, and the like. In the real space, the point mass 45 of the object 40 is defined to be the point where a straight line in the direction corresponding to the representative point 43 in the image space 41 intersects a reference plane 44 at z=0. The reference plane 44 corresponds to the road surface or ground surface on which the vehicle 100 is located. The point mass 45 has three-dimensional coordinates (x, y, 0). Consequently, when the two-dimensional space at z=0 is the virtual space 46, the coordinates of the point mass 45 can be expressed as (x', y'). The coordinates (x', y') of the point mass 45 in the virtual space 46 correspond to the coordinates (x, y) of a specific point of the object 40 in the xy plane (z=0) when viewing the object 40 from the direction along the z axis in the real space. The specific point corresponds to the point mass 45.

As illustrated in FIG. 6, the processor 23 tracks the position (x', y') and speed (vx', vy') of the point mass 45 mapped to the virtual space 46 from the representative point 43 of the object image 42 in the virtual space 46 (step S104). Since the point mass 45 has information on position (x', y') and speed (vx', vy'), the processor 23 can predict a range for the position (x', y') of the point mass 45 in a sequential frame. The processor 23 can recognize that a point mass 45 located within the predicted range in the next frame is the point mass 45 that corresponds to the tracked object image 42. The processor 23 sequentially updates the position (x', y') and speed (vx', vy') of the point mass 45 every time the processor 23 receives the input of a new frame.

To track the point mass 45, estimation using Kalman filters based on a state-space model can be adopted, for example. Prediction/estimation using Kalman filters improves robustness against false negatives, false positives, and the like of the object 40 to be detected. In general, describing the object image 42 in the image space 41 with an appropriate model describing motion is difficult. Thus, simple and accurate position estimation for the object image 42 in the image space 41 has been difficult. In the object tracking device 20 according to the present disclosure, mapping the object image 42 to the point mass 45 in the real space allows for the application of a model describing motion in the real space, thereby improving tracking accuracy for the object image 42. Handling the object 40 as the point mass 45 of negligible size allows for simple and easy tracking.

Every time the processor 23 estimates a new position of the point mass 45, the processor 23 may map the coordinates of the point mass 45 in the virtual space 46 to coordinates (u, v) in the image space 41 to indicate the estimated position (step S105). The processor 23 can map the point mass 45 located at the coordinates (x', y') in the virtual space 46 to the image space 41 as a point located at the coordinates (x, y, 0) in the real space. The processor 23 can use a known method to map the coordinates (x, y, 0) in the real space to the coordinates (u, v) in the image space 41 of the imaging device 10. The processor 23 can convert back and forth between the coordinates (u, v) in the image space 41, the coordinates (x', y') in the virtual space 46, and the coordinates (x, y, 0) in the real space.

### (Data association)

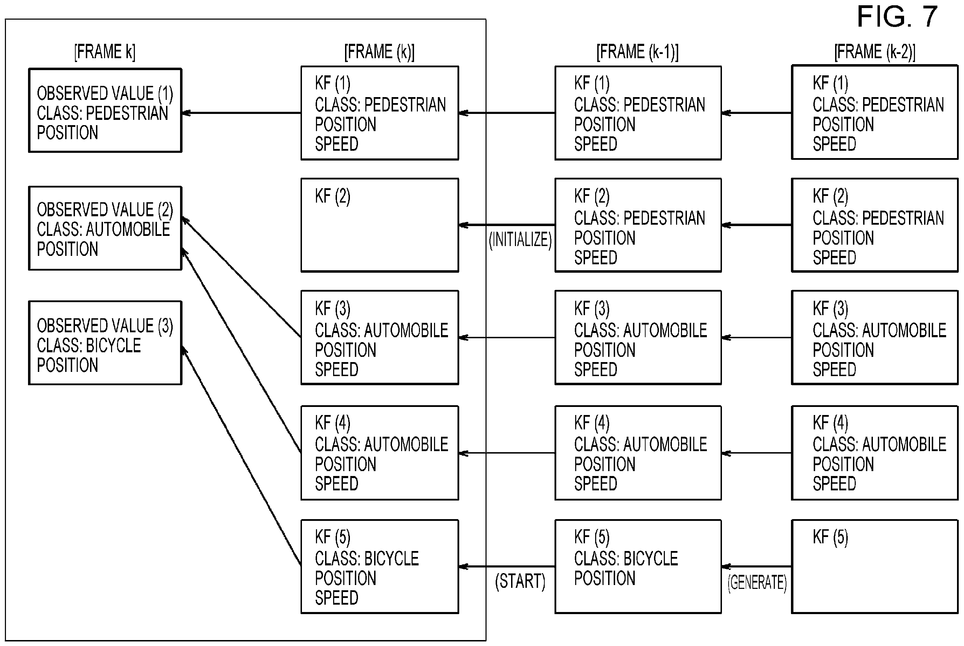

FIG. 7 is a diagram for explaining data association. Data association is a process of associating Kalman filters with observed values. In data association, a plurality of Kalman filters may be associated with a plurality of observed values. An observed value is a position of a detection target. The processor 23 assigns identifiers to distinguish the plurality of observed values and the plurality of Kalman filters. In the present embodiment, the processor 23 uses a serial number, for example, to identify each of the plurality of observed values as observed value (1), observed value (2), observed value (3), and so on. The processor 23 uses a symbol and a serial number, for example, to identify each of the plurality of Kalman filters as KF (1), KF (2), KF (3), and so on.

In the present embodiment, the processor 23 performs data association between M observed values and N Kalman filters. M is an integer equal to or greater than 2. N is an integer equal to or greater than M. In the example in FIG. 7, the processor 23 performs data association between three observed values and 5 Kalman filters. Observed value (1) is the position of the pedestrian 40A detected in frame (k) of a moving image. Observed value (2) is the position of the automobile 40B detected in frame (k) of the moving image. Observed value (3) is the position of the bicycle 40C detected in frame (k) of the moving image. Frame (k-1) is the frame that is one before frame (k) in the moving image. Frame (k-2) is the frame that is two before frame (k) in the moving image. The current frame is assumed to be frame (k).

KF (2) is used to track the pedestrian 40A up to the time of frame (k-1), but is initialized partway through, and is not used to track the position of the detection target. KF (5) is a Kalman filter that is newly prepared due to the new recognition of the bicycle 40C in frame (k-2). Since the newly recognized bicycle 40C is also recognized in the current frame (k), KF (5) starts tracking the detection target. The other Kalman filters each continue to track a detection target from the time of frame (k-2).

In the example in FIG. 7, the processor 23 associates KF (1) with observed value (1). The processor 23 associates KF (3) and KF (4) with observed value (2). The processor 23 associates KF (5) with observed value (3). As with the example of the observed value (2), the processor 23 allows detection results to overlap in the process of tracking a plurality of detection targets. That is, the processor 23 uses KF (3) and KF (4) to predict ranges for the position of observed value (2), namely the automobile 40B. Allowing overlap in data association in this way enables local optimization. For example, in methods that make one-to-one associations between a plurality of observed values and a plurality of Kalman filters without allowing overlap (the Hungarian algorithm is one such example), a single misassociation can create a chain reaction due to global optimization. The present embodiment allows overlap, and thus the problem of a chain reaction of misassociations does not occur. The process of tracking involves associating one or more Kalman filters with one observed value, thereby allowing for improved robustness because tracking failure does not occur readily for any of the observed values.

### (Tracked object ID management)

A plurality of Kalman filters may be associated with a single observed value as above, but a plurality of observed values may also be associated with a single object to be detected. As an example, consider the case in which the detection target is the automobile 40B, which briefly disappears from the moving image due to the lane change or the like and then reappears in the moving image. In this case, a new observed value may be associated as a separate object. To track objects accurately, the object tracking device 20 preferably identifies each tracked object to ascertain the associations between tracked objects and observed values. In the present embodiment, the processor 23 executes tracked object ID management using a hierarchical structure as described below to group a plurality of Kalman filters and determine whether the grouped plurality of Kalman filters correspond to the same object.

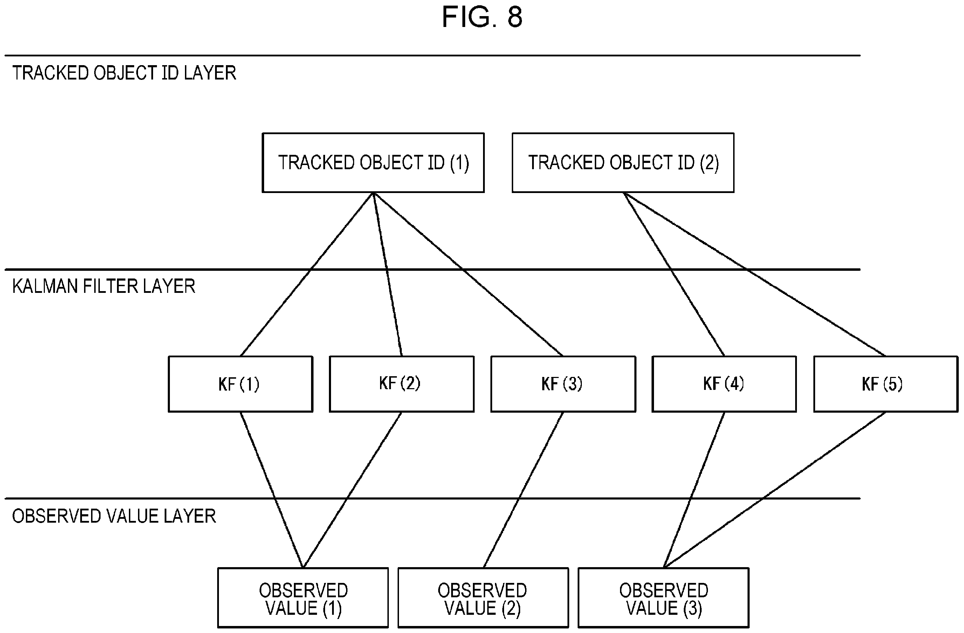

FIG. 8 is a diagram illustrating a hierarchical structure of tracked object ID management in the present embodiment. Tracked object ID management is a process of associating Kalman filters with detection targets. As illustrated in FIG. 8, the processor 23 manages observed values, Kalman filters, and tracked object IDs in layers (tiers). By associating observed values, Kalman filters, and tracked object IDs, the processor 23 is capable of accurate object tracking. As described above, a tracked object ID is identification information unique to each tracked object. If the same tracked object ID is associated with a plurality of observed values and a plurality of Kalman filters, the observed values and Kalman filters relate to the tracking of the same object.

The processor 23 groups a plurality of Kalman filters upon acquiring a frame of a moving image. The processor 23 updates the associations between the observed values, Kalman filters, and tracked object IDs. In the example in FIG. 8, the processor 23 groups KF (1), KF (2), and KF (3) and assigns the identifier "tracked object ID (1)" to an object to be tracked using these Kalman filters to control the tracking of the object. The processor 23 groups KF (4) and KF (5) and assigns the identifier "tracked object ID (2)" to an object to be tracked using these Kalman filters to controls the tracking of the object. The processor 23 controls tracking in a hierarchical structure that links the Kalman filters corresponding to an object determined to be the same and also links detection results regarding the detection target corresponding to these Kalman filters. Thus, the processor 23 is capable of accurate, error-free tracking. The processor 23 can compare or select detection results using a plurality of linked Kalman filters, for example, to obtain a detection result with high level of confidence.

### (Limit on range of variation in index)

As above, a plurality of Kalman filters may be associated with a single observed value, and a plurality of Kalman filters may be associated with a single detection target (detection target having a single tracked object ID). Associating a plurality of Kalman filters can make tracking resistant to failure, raise tracking accuracy, and improve robustness. To ensure consistent tracking, the processor 23 can impose a limit on the range of variation in an index of the Kalman filters that influences tracking of the detection target. As a specific example, limiting the range of variation in an index involves imposing an upper limit and/or a lower limit, and may be referred to as a clipping process. In the present embodiment, the index includes at least one selected from the group consisting of the Mahalanobis distance used to associate Kalman filters with an observed value, the radius of a grouping area used to associate Kalman filters with a detection target, and the size of the error ellipse of a Kalman filter. The following describes limiting the range of variation in each of these indices.

The processor 23 may limit the range of variation in an index in the above data association. In this case, the index includes the Mahalanobis distance. The Mahalanobis distance is a representation of data divergence. In the present embodiment, the Mahalanobis distance represents the divergence between the center of an error ellipse of a Kalman filter and an observed value. The error ellipse of a Kalman filter indicates the estimation range given by a probability density distribution of position, and indicates that the position has a certain probability (as one example, 99%) of being located inside the ellipse. The processor 23 calculates the error ellipse using, among other things, the standard deviation in the x' direction and the standard deviation in the y' direction of the two-dimensional virtual space 46 (see FIG. 6).

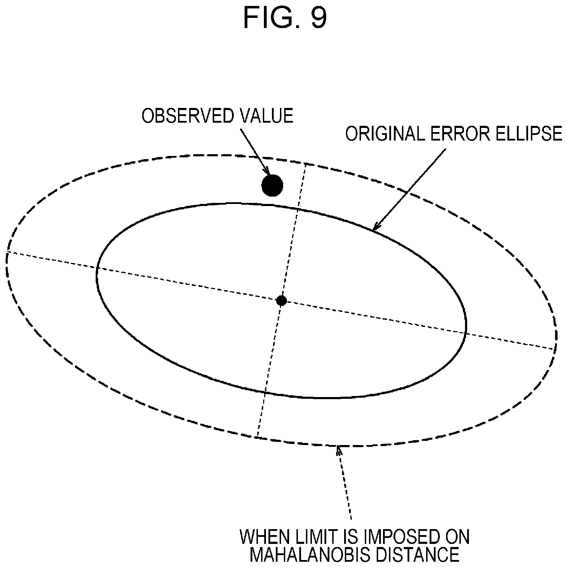

FIG. 9 is a diagram for explaining a limit on the Mahalanobis distance. In the absence of a limit on the Mahalanobis distance, an observed value contained in an error ellipse is associated with the Kalman filter having that error ellipse. If a plurality of observed values are contained within the validation gate (boundary) of an error ellipse, the observation with the smallest Mahalanobis distance from the center of the error ellipse is selected and associated with the Kalman filter having that error ellipse. As the process of tracking a detection target progresses, the tracking accuracy (the certainty of the predicted position) improves, and the error ellipse decreases in size. On the other hand, measurement error, noise effects, and the like in the imaging optical system 11 may shift the position of an observed value from the center of the error ellipse of the Kalman filter. Consequently, in the absence of a limit on the Mahalanobis distance, tracking may not continue if an error ellipse decreases in size and an observed value is no longer contained within the validation gate, like the example in FIG. 9. In the present embodiment, the processor 23 imposes a lower limit (see the dashed line in FIG. 9) on the Mahalanobis distance in data association. If the validation gate of the error ellipse of a Kalman filter is on the inner side of the lower limit of the Mahalanobis distance, the processor 23 uses the Mahalanobis distance at the lower limit to make an association with an observed value. Thus, the association between an observed value and a Kalman filter is not lost, and tracking continues.

The lower limit (see the dashed line in FIG. 9) on the Mahalanobis distance is used only to associate an observed value and a Kalman filter in data association. Position tracking (position prediction calculation) for a detection target corresponding to an observed value uses the original error ellipse (see the solid line in FIG. 9) for calculation. In this way, tracking accuracy is not lowered.

The processor 23 may limit the range of variation in an index in the above tracked object ID management. The association between the same detection target and Kalman filters in tracked object ID management is performed by clustering, such as density-based spatial clustering of applications with noise (DBSCAN), for example. If the centers of the error ellipses for a plurality of Kalman filters are contained in a grouping area of predetermined range, the processor 23 determines that the Kalman filters belong to a single group. The clustering algorithm is not limited to DBSCAN. For example, clustering may be executed according to another algorithm, such as k-means clustering, for example.

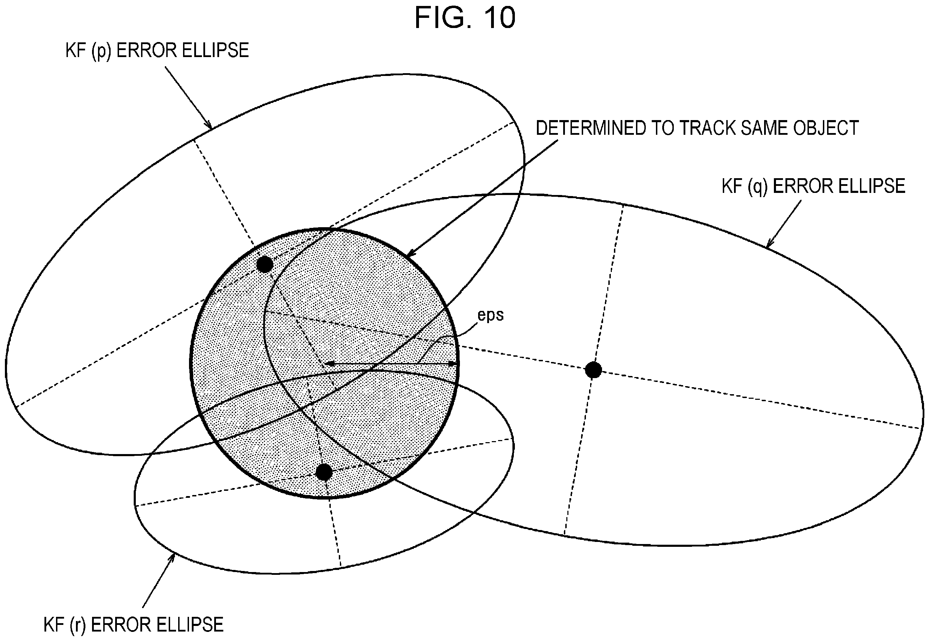

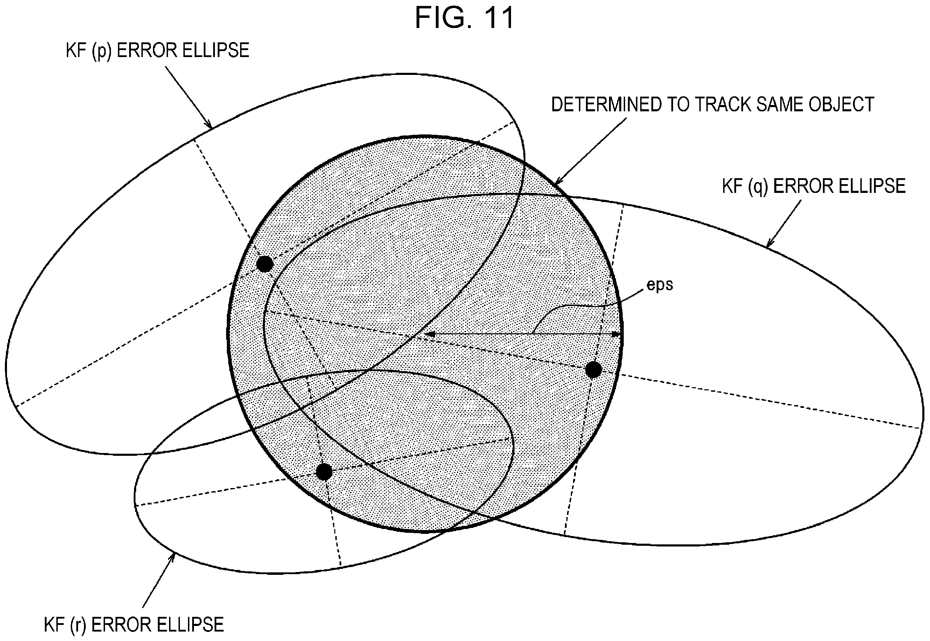

FIGs. 10 and 11 are diagrams for explaining a limit on a grouping area. In the examples in FIGs. 10 and 11, the circle indicates the grouping area. The index to be limited in the range of variation by the processor 23 includes the radius (eps) of the grouping area. The processor 23 imposes an upper limit and/or a lower limit on the radius (eps) of the grouping area according to observation noise and/or the distance to the detection target.

When a detection target is distant, the range of the same detection target is susceptible to the influence of observation noise. Observation noise is, for example, image distortion due to the lens included in the imaging optical system 11. When the detection target is distant, the processor 23 sets a large radius (eps) of the grouping area without going over an upper limit, as in FIG. 11. The processor 23 imposes the upper limit on the basis of the distance dependency of observation noise so that the range of the group of Kalman filters to be associated with the same detection target does not extend indefinitely. In the example in FIG. 11, three Kalman filters KF (p), KF (q), and KF (r) are associated with the same detection target.

When a detection target is nearby, the range of the same detection target is relatively resistant to the influence of observation noise. When the detection target is nearby, the processor 23 sets a small radius (eps) of the grouping area without going under a lower limit, as in FIG. 10. The processor 23 imposes the lower limit on the basis of the distance dependency of observation noise so that the Kalman filters to be associated with the same detection target do not become zero. In the example in FIG. 10, two Kalman filters KF (p) and KF (r) are associated with the same detection target. In other words, KF (q) is associated with a different detection target. For example, when tracking an approaching object, the processor 23 may gradually decrease the radius (eps) of the grouping area in the range from the upper limit to the lower limit. At this time, the processor 23 can determine that what the processor 23 determined to be a single object at a distance (see FIG. 11) is, at a closer distance, two or more objects in proximity (see FIG. 10). As another example, the processor 23 may set the radius of the grouping area variably depending only on the influence of observation noise. For instance, the processor 23 may adjust the radius of the grouping area according to a change in observation noise due to the imaging environment (the weather, as one example).

In this way, the processor 23 imposes an upper limit and/or a lower limit imposed on the radius (eps) of the grouping area according to observation noise and/or the distance to the detection target. By varying the imposed limit(s), the processor 23 can continue tracking with higher accuracy.

The processor 23 may limit the range of variation in an index so that the error ellipse does not become too small relative to an output accuracy (guaranteed accuracy) required for a detection result regarding a detection target. The guaranteed accuracy may be set as a range of allowable error, for example. As described in the limiting of the range of variation in an index in data association above, as the process of tracking a detection target progresses, the tracking accuracy (the certainty of the predicted position) improves, and the error ellipse decreases in size. On the other hand, tracking may not continue if an error ellipse decreases in size and an observed value is no longer contained within the validation gate.

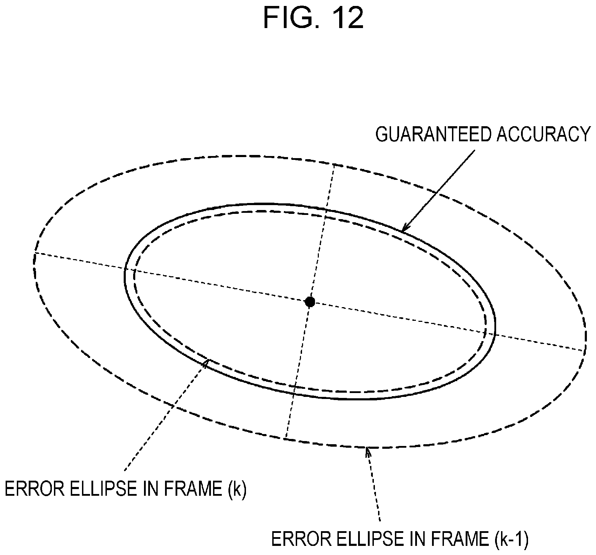

FIG. 12 is a diagram for explaining a limit on the size of an error ellipse according to the guaranteed accuracy. In the example in FIG. 12, when going from frame (k-1) to frame (k), the error ellipse of a Kalman filter becomes smaller than the guaranteed accuracy. Consequently, performing tracking computation using the error ellipse of the Kalman filter in frame (k) will produce an over-engineered result. The reduced size of the error ellipse of the Kalman filter could also cause an observed value to fall outside the validation gate. In the present embodiment, the index to be limited in the range of variation by the processor 23 includes the size of the error ellipse. The processor 23 imposes a lower limit on the size of the error ellipse according to the accuracy to be guaranteed for a detection result regarding a detection target. That is, the processor 23 adjusts the error ellipse of a Kalman filter so that the size of the error ellipse does not fall below the guaranteed accuracy (see the solid line in FIG. 12), and the association between an observed value and a Kalman filter continues.

The processor 23 may limit the range of variation in an index so that the size of an error ellipse is appropriate according to the saturability of an observed value that depends on the distance to a detection target. The saturability of an observed value means that a limit exists on improvement in the accuracy of the position of an observed value at close range, and that no loss of accuracy occurs even if the position is farther away.

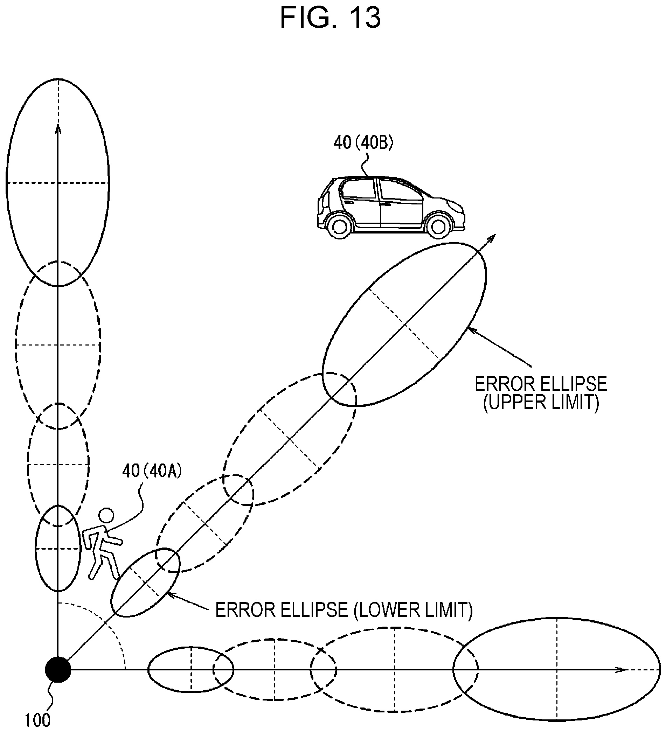

FIG. 13 is a diagram for explaining a limit on the size of an error ellipse according to saturability of detection results. In the example in FIG. 13, the pedestrian 40A is sufficiently close to the vehicle 100 equipped with the object tracking device 20. Even if the error ellipse associated with the observed value for the pedestrian 40A becomes smaller, the detection accuracy will not improve, due to the saturability of the observed value. In the example in FIG. 13, the automobile 40B is sufficiently far from the vehicle 100 equipped with the object tracking device 20. Even if the error ellipse associated with the observed value for the automobile 40B becomes larger, the detection accuracy will not change, due to the saturability of the observed value. In the example in FIG. 13, the index to be limited in the range of variation by the processor 23 includes the size of the error ellipse. The processor 23 imposes an upper limit and/or a lower limit according to the saturability of an observed value that depends on the distance to a detection target. That is, in the present embodiment, the processor 23 does not change the size of an error ellipse in cases where changing the size of the error ellipse would not result in improved accuracy or reduced accuracy. Thus, the processor 23 can maintain the association between an observed value and a Kalman filter, and continue tracking with high accuracy.

The processor 23 does not necessarily impose all of the above limits on the range of variation in an index at the same time. That is, the processor 23 may select or combine some of the above limits on the range of variation in an index. The processor 23 may select only the Mahalanobis distance as the index to be limited in the range of variation, for example. The processor 23 may select the radius of the grouping area and the size of an error ellipse according to the saturability of an observed value as indices to be limited in the range of variation, for example. In this case, the processor 23 may impose only a lower limit or only an upper limit on the size of the error ellipse.

As above, with the above configuration, the object tracking device 20 according to the present embodiment allows detection results to overlap in the process of tracking a plurality of detection targets. Thus, the object tracking device 20 can track a plurality of objects accurately, without creating a chain reaction of misassociations. The object tracking device 20 according to the present embodiment also limits the range of variation in an index. Thus, the object tracking device 20 can track an object accurately and consistently.

An embodiment according to the present disclosure has been described on the basis of the drawings and examples, but note that it would be easy for a person skilled in the art to make various variations or revisions on the basis of the present disclosure. Consequently, it should be understood that these variations or revisions are included in the scope of the present disclosure. For example, the functions and the like included in each component, each step, and the like may be rearranged in logically non-contradictory ways, and it is possible to combine a plurality of components, steps, or the like into one or divide a component, step, or the like. Embodiments of the present disclosure have been described mainly in terms of a device, but an embodiment of the present disclosure may also be implemented as a method including steps to be executed by each component of a device. An embodiment of the present disclosure may also be implemented as a method or program to be executed by a processor provided in a device, or as a storage medium on which the program is recorded. It should be understood that these embodiments are also included in the scope of the present disclosure. In one example, the steps of a process to be executed by the processor 23 are included in the object tracking method in FIG. 3, thereby also achieving the limiting of the range of variation in an index as a method.

In the above embodiment, the object tracking system 1 includes the imaging device 10, the object tracking device 20, and the display 30, but the object tracking system 1 may include a device integrating at least two of the above devices. For example, the imaging device 10 may include the functions of the object tracking device 20. In this case, the imaging device 10 may include the storage 22 and the output interface 24 in addition to the imaging optical system 11, the image sensor 12, and the processor 13. The processor 13 may execute the processing performed by the processor 23 in the above embodiment on a moving image outputted by the imaging device 10. Such a configuration may be used to achieve an imaging device 10 that executes object tracking.

The "moving bodies" in the present disclosure include vehicles, marine vessels, and aircraft. "Vehicles" in the present disclosure include, but are not limited to, automobiles and industrial vehicles, and may include railway cars, lifestyle vehicles, and fixed-wing aircraft that travel on a runway. Automobiles include, but are not limited to, passenger cars, trucks, buses, motorcycles, and trolleybuses, and may include other vehicles that travel on roads. Industrial vehicles include industrial vehicles for agriculture and construction. Industrial vehicles include, but are not limited to, forklifts and golf carts. Industrial vehicles for agriculture include, but are not limited to, tractors, cultivators, transplanters, binders, combines, and lawn mowers. Industrial vehicles for construction include, but are not limited to, bulldozers, scrapers, excavators, cranes, dump trucks, and road rollers. Vehicles includes human-powered vehicles. The types of vehicles are not limited to the types given above. For example, automobiles may include industrial vehicles that can travel on roads, and the same vehicle may be included in multiple types. Marine vessels in the present disclosure include marine jets, boats, and tankers. Aircraft in the present disclosure include fixed-wing and rotary-wing aircraft.

### REFERENCE SIGNS

1 object tracking system
10 imaging device
11 imaging optical system
12 image sensor
13 processor
20 object tracking device
21 input interface
22 storage
23 processor
24 output interface
30 display
40 object
40A pedestrian
40B automobile
40C bicycle
41 image space
42 object image
43 representative point
44 reference plane
45 point mass
46 virtual space
100 vehicle

## Claims

1. An object tracking device comprising:
an input interface configured to acquire sensor data,
a processor configured to detect a detection target from the sensor data and track the detection target using Kalman filters associated with each of the detection target and an observed value, and
an output interface configured to output a detection result regarding the detection target, wherein
the processor is configured to impose a limit on a range of variation in an index of the Kalman filters that influences tracking of the detection target.

2. The object tracking device according to claim 1, wherein the index includes at least one selected from the group consisting of a Mahalanobis distance used to associate the Kalman filters with the observed value, a radius of a grouping area used to associate the Kalman filters with the detection target, and a size of an error ellipse of the Kalman filters.

3. The object tracking device according to claim 2, wherein
the index includes the Mahalanobis distance, and
the processor is configured to impose a lower limit on the Mahalanobis distance.

4. The object tracking device according to claim 2, wherein
the index includes the radius of the grouping area, and
the processor is configured to impose an upper limit and/or a lower limit on the radius of the grouping area according to observation noise and/or a distance to the detection target.

5. The object tracking device according to claim 2, wherein
the index includes the size of the error ellipse, and
the processor is configured to impose a lower limit on the size of the error ellipse according to an accuracy to be guaranteed for a detection result regarding the detection target.

6. The object tracking device according to claim 2, wherein
the index includes the size of the error ellipse, and
the processor is configured to impose an upper limit and/or a lower limit according to a saturability of the observed value that depends on a distance to the detection target.
